(19) Europäisches Patentamt
European Patent Office
Office européen des brevets

(11) Publication number: 0 298 667 A2

(12) **EUROPEAN PATENT APPLICATION**

(21) Application number: 88306004.8

(22) Date of filing: 01.07.88

(51) Int. Cl.4: C08L 53/00, C08F 297/02, C09J 3/14

(30) Priority: 06.07.87 US 70269
23.03.88 US 172040

(43) Date of publication of application:
11.01.89 Bulletin 89/02

(84) Designated Contracting States:
BE CH DE FR GB IT LI NL SE

(71) Applicant: THE DOW CHEMICAL COMPANY
2030 Dow Center Abbott Road P.O. Box 1967
Midland Michigan 48640-1967(US)

(72) Inventor: McGrath, James E.
902 Elliott Drive
Blacksburg Virgina 26040(US)
Inventor: Tung, Lu Ho
401 Hunters Ridge
Midland Michigan 48640(US)
Inventor: Long, Timothy E.
29 Rose Croft Drive
Rochester New York 14616(US)
Inventor: Deporter, Craig D.
213 Lantern Ridge
Blacksburg Virgina 24060(US)
Inventor: Broske, Allan D.
2819 Evanston Avenue
Erie Pennsylvania 16506(US)

(74) Representative: Burford, Anthony Frederick et al
W.H. Beck, Greener & Co. 7 Stone Buildings
Lincoln's Inn
London WC2A 3SZ(GB)

(54) **Block polymers of methacrylates and derivatives thereof.**

(57) Block polymers comprise in polymeric form, at least one block selected from hydrolyzable $C_2$-$C_5$ alkyl methacrylates, methacrylic acid and ionomers thereof and at least one other block of an an ionically copolymerizable monomer other than methylmethacrylate. Preferably, the other block comprises, in polymerized form,a conjugated diene, hydrogenated conjugated diene or a $C_6$-$C_{20}$ nonhydrolyzable methacrylate ester. It is especially preferred that the diene is butadiene or isoprene, the nonhydrolyzable methacrylate is 2-ethylhexymethacrylate and that the hydrolyzable methacrylate is t-butyl methacrylate.

EP 0 298 667 A2

## BLOCK POLYMERS OF METHACRYLATES AND DERIVATIVES THEREOF

The present invention relates to block polymers comprising methacrylic acid and derivatives of methacrylic acid as well as method for the preparation of such block polymers. In the past, carboxylic acid containing polymers have been typically synthesized by the direct free radical polymerization of various carboxylic acids, as well as ester, or anhydride derivatives thereof with various vinyl comonomers. The corresponding carboxylic salt derivatives or ionomers are typically prepared by partial or complete neutralization of carboxylic acid groups with various basic compounds. Previously known synthetic routes have resulted in the random placement of such acid or ionic groups along polymer backbones. It would be desirable to provide similar polymeric structures having controlled composition and architecture, predictable molecular weights and narrow molecular weight distributions.

It is previously known to use anionic polymerization techniques for the preparation of block polymers having controlled morphology and composition as well as architecture and predictable molecular weights, as well as narrow molecular weight distributions. However, previous attempts to prepare diene-containing block copolymers additionally comprising carboxylic acid or ester moieties have not been successful due to competing reactions involving the carbonyl functionality of such monomers. The incidents of such undesired competing reactions can be severely reduced or even eliminated by the use of protecting groups in the block copolymer chain. For example, 1,1-diphenylethylene polymerized between blocks of ethylenically unsaturated carboxylic acids or esters and diene blocks may be employed to prepare block copolymers in relatively high purity.

Regardless of the method of preparation, such techniques have required the use of reduced temperatures as low as -50°C or -80°C due to the instability of the intermediate anionic species. Moreover, 1,1-diphenylethylene is both expensive and of a limited availability, and accordingly, processes involving its use have proven excessively costly.

Group Transfer Polymerization techniques have recently been employed in order to prepare block polymers of polar monomers such as the alkyl methacrylates. Disadvantageously such techniques are not applicable to the preparation of diene containing block polymers.

It would be desirable if there were provided a process for preparing block polymers of diene and carboxylic acids as well as esters or neutral salts thereof which do not require the use of commercially impractical reaction conditions such as reduced temperatures less than 0°C. In addition, it would be desirable to provide a process for the preparation of block polymers comprising dienes and carboxylic acids, as well as esters or neutral salts thereof that does not require the use of expensive reagents such as 1,1-diphenylethylene.

Moreover, it is previously known that tertiary butyl methacrylate may be polymerized by anionic techniques. All methacrylate block copolymers of methyl methacrylate/ethyl methacrylate, methyl methacrylate/n-butyl methacrylate and methyl methacrylate/t-butyl methacrylate were disclosed in Polymer Preprints 26(1) 1985, pg. 247-248.

According to the present invention, there are now provided compositions comprising at least 90 percent by weight of a block polymer comprising in polymerized form at least one block of a moiety selected from the group consisting of the hydrolyzable $C_{2-5}$ alkyl esters of methacrylic acid; methacrylic acid; and ammonium, alkali metal, alkaline earth metal, aluminum, tin, zinc or nickel salts of methacrylic acid and at least one other block of a different anionically polymerizable monomer other than methylmethacrylate.

Preferred are those block polymers comprising in polymerized form at least one block selected from the group consisting of one or more conjugated dienes or hydrogenated diene moieties and one or more non-hydrolyzable methacrylate ester moieties having 6 to 20 carbons in the ester group and at least one other block selected from the group consisting of hydrolyzable esters of methacrylic acid having from 2 to 5 carbons in the ester group, methacrylic acid and salts of methacrylic acid.

In a more preferred embodiment these block polymers correspond to the formula $AB\text{-}(BA)_n$ (I) or $BA\text{-}(AB)_n$(II)
wherein:

A is a homopolymer comprising, in polymerized form, a hydrolyzable ester of methacrylic acid having from 2 to 5 carbons in the ester group, methacrylic acid, or a salt of methacrylic acid, or A is a block or random copolymer comprising, in polymerized form, more than one hydrolyzable ester of methacrylic acid, methacrylic acid or a salt thereof; or A is a block or random copolymer of one or more hydrolyzable esters of methacrylic acid, methacrylic acid or salts thereof with one or more copolymerizable comonomers,

B is a homopolymer comprising, in polymerized form, a non-hydrolyzable methacrylate ester moiety having from 6 to 20 carbons in the ester group, or a diene or hydrogenated diene moiety, or B is a block or

random copolymer comprising in polymerized form more than one non-hydrolyzable methacrylate ester moiety having from 6 to 20 carbons, or more than one diene or hydrogenated diene; or B is a block or random copolymer comprising in polymerized form one or more than one non-hydrolyzable methacrylate esters having from 6 to 20 carbons in the ester group, conjugated dienes or hydrogenated dienes with one or more copolymerizable comonomers, and

n is a number from 0 to 6.

In addition, the present invention encompasses a method for the preparation of such block polymers comprising contacting a living diene polymer anion with one or more hydrolyzable methacrylate ester monomers having from 2 to 20 carbons in the ester group under anionic polymerization conditions. By later applied conventional techniques, the ester functionality of the block polymer may be altered to yield acid or neutral salt derivatives having an ordered placement of functional groups. According to the present method, it has been found expeditious to prepare the block polymers of the invention in high yields utilizing commercially acceptable reaction conditions, especially temperatures for the initial methacrylate ester addition on the order of 0°C to 35°C, preferably from 10°C to 35°C. Moreover, by use of the present process, the need to use 1,1-diphenylethylene to obtain addition of the methacrylate ester to the block polymer is avoided.

Anionic polymerization techniques are well known and previously disclosed in the art. See, for example, M. Morton, "Anionic Polymerization Principles and Practice", Academic Press (1983). Briefly, a living anion is prepared by use of from 0.001 to 1.0 percent by weight of a reactive anionic polymerization initiator. Suitable initiators include the well known metals such as sodium and lithium as well as the more preferred metal alkyl compounds particularly lithium alkyls. A particularly preferred monofunctional anionic initiator is sec-butyl lithium. Di- and other multifunctional initiators are also previously known in the art. Preferred difunctional anionic initiators include those compositions disclosed in U.S. Patents 4,172,190; 4,196,154; 4,172,100; 4,182,818; 4,196,153; 4,200,718; 4,205,016; and 4,201,729; the teachings of which are incorporated herein by references thereto. The polymerization may be conducted with or without a solvent at temperatures from -60°C to 75°C.

The polymers of the present invention may be prepared according to any suitable technique. Simple repeating diblock and triblock copolymers may be prepared by sequential addition of the respective monomers. Suitably, a monofunctional organometallic anionic polymerization initiator may be contacted with the monomer or monomers comprising block A of Formula I (or block B of Formula II) under anionic polymerization conditions. The polymerization is preferably conducted on a solvent particularly an inert, aprotic, organic liquid such as toluene, hexane, cyclohexane tetrahydrofuran, etc. A preferred solvent is tetrahydrofuran. Symmetrical multiblock polymers may be produced by contacting the living polymer anion with a coupling agent of functionality $n+1$.

An alternative technique for preparing such symmetrical multiblock polymers utilizes a multifunctional organometallic anionic polymerization initiator of functionality $n+1$. The monomer or monomers for block B (for Formula I polymers) or for block A (for Formula II polymers) are contacted with the polymerization initiator under anionic polymerization conditions, and after complete polymerization, the remaining monomers are added to the reactor and polymerized. If vinylaromatic or diene monomers are employed in the invention, their polymerization must precede the polymerization of any esters of methacrylic acid.

By later applied conventional techniques, the hydrolyzable ester functionality of the block polymer may be altered to yield acid or neutral salt derivatives having an ordered placement of functional groups.

Aliphatic dienes, particularly conjugated aliphatic dienes, such as butadiene or isoprene are particularly well suited for the preparation of block polymers having a desirable low glass transition temperature (Tg). Such block polymers possessing elastomeric properties preferably have glass transition temperatures less than about 0°C, most preferably less than about -25°C. By the use of conventional hydrogenation techniques, residual unsaturation in such block polymers may be substantially reduced thereby imparting improved ultraviolet light stability to the polymers. The resulting elastomers are particularly well suited for use in impact modification of thermoplastic polymers for use in preparing structures requiring improved environmental weathering resistance.

Suitable diene polymers include homopolymers of the above mentioned dienes and polymers thereof with polymerizable ethylenically unsaturated comonomers. Preferred diene polymers are block polymers containing one or more diene homopolymer blocks and one or more monovinylidene aromatic monomer homopolymer blocks.

In one preferred embodiment, it has been found desirable to employ a living diene polymer anion comprising, as terminating anionic functionality, a monovinylidene aromatic block segment. Such living polymer anions are further defined by the formula:

$M \leftarrow D''-M)_y^-$, $(D''-M)_y^-$, $(M-D'')_y^-$, or $^-(M-D'' \rightarrow [\leftarrow D''-M)_y^-]_n$,

wherein $D''$ is a diene homopolymer block, M is a monovinylidene aromatic monomer homopolymer block, y is a number greater than 0 that is equal to the average number of repeating diene and monovinylidene aromatic monomer homopolymer blocks, and n is as previously defined.

In the resulting block polymers, it is desirable that the diene polymer block (B of Formula I or II) comprise homopolymer blocks of a monovinylidene aromatic monomer and diene homopolymer blocks such that the monovinylidene aromatic monomer homopolymer blocks are interposed between the A blocks and the diene homopolymer blocks or hydrogenated derivatives thereof. The resulting block polymers of the invention therefore correspond to the formula:

$M \leftarrow D'-M \rightarrow_y A$, $(D'-M \rightarrow_y A$, or $A \leftarrow M-D' \rightarrow_y [\leftarrow D'-M \rightarrow_y A]_n$,

wherein $D'$ is a diene homopolymer block or a hydrogenated derivative thereof, and M, A, n, and y are as previously defined. In the above formulae, the first and second appearing compounds are prepared by the use of a monofunctional initiator and the initial polymerization of either the monovinylidene aromatic monomer or the diene monomer respectively. The compositions corresponding to the third formula are prepared by the use of multifunctional initiators.

Suitably, the weight ratio of monovinylidene aromatic monomer homopolymer block to diene homopolymer block may be from 1/100 to 10/1. Preferably, in order to preserve the elastomeric properties of the block polymer, the weight ratio of monovinylidene aromatic monomer homopolymer block to diene homopolymer block is from 1/100 to 1/1. A preferred monovinylidene aromatic monomer is styrene.

Next, the living diene polymer anion is contacted with a hydrolyzable methacrylate ester monomer having from 2 to 5 carbons in the ester group under anionic polymerization conditions so as to prepare a methacrylate ester block. A central discovery according to the present invention is the fact that certain methacrylate esters form desirable block copolymers which surprisingly are relatively stable under standard acid catalyzed hydrolysis reactions.

The addition of the hydrolyzable ester functionality to the living diene anion has been found to be beneficially advanced by the addition to the reaction mixture of a polar, aprotic organic compound in a quantity sufficient to modify the polymerization rate of the reaction. Suitable polar organic compounds include polar aprotic organic compounds exemplified by the cyclic ethers, particularly tetrahydrofuran. Preferably, the polar organic compound is employed in an amount from 0.5 to 90 weight percent, most preferably from 25 to 75 weight percent based on total solvent weight. Preferably, the polar organic compound is added to the reaction mixture after formation of the living diene polymer anion.

At this point, residual unsaturation of any diene polymer may be hydrogenated if desired. The polymerization may be terminated or continued with addition of further methacrylate functionality to form multiblock polymer functionality. Residual unsaturation may be hydrogenated by use of known techniques if desired.

Block copolymers containing nonhydrolyzable ester functionality are prepared in a similar manner. As used herein, the term "non-hydrolyzable" refers to the fact that one methacrylate ester functionality of the polymers is not substantially hydrolyzed under conditions leading to substantial hydrolysis of other methacrylate ester functionality in the same polymer. That is, greater than 50 mole percent of the nonhydrolyzable methacrylate ester functionality should remain under conditions wherein greater than 50 mole percent of the hydrolyzable methacrylate ester functionality in the polymer is hydrolyzed. Preferably, greater than 75 percent of the nonhydrolyzable methacrylate ester functionality remains while greater than 75 percent of the hydrolyzable methacrylate ester functionality is hydrolyzed. Most preferably, substantially all of the nonhydrolyzable methacrylate ester functionality remains while substantially all of the hydrolyzable methacrylate ester functionality in the same polymer is hydrolyzed.

As the non-hydrolyzable methacrylate ester, either aryl or alkyl esters of from 6 to 20 carbons are preferred. A most preferred non-hydrolyzed methacrylate ester is 2-ethylhexylmethacrylate. The block polymers of the invention may be in the form of diblock-, triblock-, or star block polymers and may have standard, random, or tapered geometry.

The hydrolyzable and nonhydrolyzable methacrylate monomers are preferably reacted at temperatures from -100 to +35°C. The t-alkyl methacrylates have been found to be particularly stable even at elevated temperatures of 10 to 35°C and may be reacted at such elevated temperatures.

Additional copolymerizable monomers may be included in the polymerization process if desired in order to modify the resulting block copolymer properties. The copolymerizable monomers may be incorporated as separate blocks or added concurrently to the polymerization, resulting in the formation of

tapered block copolymers. Suitable copolymerizable monomers include monovinylidene aromatic monomers such as styrene, α-methylstyrene, t-butyl styrene, etc.; acrylonitrile; N,N-dialkyl acrylamides; reactive coupling agents such as divinyl benzene, ethylene glycol dimethacrylate; etc. Certain of the foregoing monomers may be employed to modify specific polymer properties. For example, t-butyl styrene containing polymers possess enhanced solubility in aliphatic solvents such as hexane. However, because the basicity of the living anion is affected by the addition of methacrylate functionality, the above described additional copolymerizable monomers are generally incorporated into the polymer prior to polymerization of either the hydrolyzable methacrylate or the non-hydrolyzable methacrylate. In addition, it may be desirable to employ a protecting group such as 1,1-diphenylethylene in order to prevent reaction of such functionality with the carbonyl functionality of later added methacrylate monomers. For the foregoing reasons, preferred polymers according to the invention comprise only hydrolyzable methacrylate ester moieties or derivatives thereof, dienes and hydrogenated derivatives thereof and non-hydrolyzable methacrylate ester moieties.

The addition of the methacrylate esters to the living anion has been found to be beneficially advanced by the addition to the reaction mixture of a polar, dry, aprotic organic compound in a quantity sufficient to modify the polymerization rate of the reaction. Suitable polar, aprotic, organic compounds are exemplified by the cyclic ethers, particularly tetrahydrofuran. Preferably, the polar, aprotic, organic compound is employed in an amount from 0.5 to 90 weight percent, most preferably from 25 to 75 weight percent based on total solvent weight.

After complete polymerization of the various monomers, the living polymer is terminated by any suitable technique. Recovery and work up are easily performed utilizing previously disclosed techniques such as precipitation and devolatilization.

To produce the highly desired methacrylic acid containing block polymers of the invention, the hydrolyzable ester functionality of the above block polymers is hydrolyzed. As an aid in such hydrolysis, it is desirable that the hydrolyzable methacrylate ester be selected to provide ease of operating conditions and good selectivity to the methacrylic acid derivative upon hydrolysis. Suitable hydrolyzable methylacrylate esters are those capable of addition under anionic polymerization conditions to a living anion preferably at a temperature from 0 °C to 35 °C. In a highly preferred embodiment, the hydrolyzable ester group of the methacrylate ester is easily removable under nonaqueous hydrolysis reaction conditions. Suitably, the hydrolysis is conducted by heating the resulting polymer containing hydrolyzable methacrylate ester groups, optionally in the presence of a catalytic amount of an acid.

Preferred hydrolyzable methacrylate esters for use in the present invention are the tertiary alkyl methacrylates. Utilizing tertiary alkyl methacrylates, it has been discovered that polymerization temperatures on the order of 10 °C to 35 °C may be suitably employed in the polymerization. This beneficial effect is believed to be due to the stability of the t-alkyl methacrylate enolate anion at such temperatures. Advantageously, heating of the resulting methacrylate ester containing block polymer, optionally in the presence of at least a catalytic amount of an acid results in alkyl-oxygen cleavage and the release of relatively volatile aliphatic reaction products and the formation of the desired methacrylic acid functionalized block polymers. Suitable acids for the above hydrolysis include the aromatic sulfonic acids, especially toluene sulfonic acid. It is understood that hydrolysis of only a portion of the ester functionality may be obtained according to the present method if desired.

Because 4-5 carbon membered alkanes which are the alkanes resulting from hydrolysis of tertiary butyl-, or 2-methyl-2-butyl-, and other 4-5 carbon tertiary alkyl ester groups are easily volatilized, they are the preferred tertiary alkyl methacrylate esters for use as the hydrolyzable ester functionality in the present invention. A highly preferred hydrolyzable, tertiary alkyl methacrylate is t-butyl methacrylate.

In the hydrolysis, a small or catalytic amount of the acid and mild temperatures on the order of about 50 ° to 100 °C are employed. A suitable solvent selected to maintain solubility may be employed to lead to higher degrees of hydrolysis. Examples of suitable solvents include toluene, xylene, chlorobenzene, etc., particularly where the amount of an incorporated hydrolyzable methacrylate ester functionality is less than about 10 percent by weight. Block polymers containing additional amounts of hydrolyzable methacrylate ester functionality may more beneficially be maintained in solution by the use of more polar solvents such as, for example, alcohols. In a desirable embodiment, the hydrolysis reaction is conducted quantitatively in order to be able to more accurately control the final acid or ion content of the block polymer.

In addition to the catalytic acid hydrolysis, the methacrylate ester functionality may also be hydrolyzed by the use of an alkali metal superperoxide such as potassium superperoxide in a suitable solvent such as a mixture of dimethyl sulfoxide and tetrahydrofuran. This technique has been taught for example by R. D. Allen, et al., Coulombic Interactions in Macromolecular Systems, A.C.S. Symposium Series, #302, pg. 79-92 (1986). The resulting hydrolyzed product may be acidified with small amounts of an acid such as hydrogen chloride to improve solubility. Due to the difficulty in handling such reagents, the super-peroxide method is

not preferred for commercial use.

Where desired, the acid functionality of the methacrylic acid containing block polymers may be neutralized by contacting with a suitable basic reagent. Examples include ammonium and metal hydroxides particularly the alkali metal hydroxides. Particularly desirable metal salts of methacrylic acid include sodium, potassium, aluminum, tin, zinc, or nickel salts. By such techniques, ionomeric block copolymers containing methacrylic acid salt moieties are prepared.

Although any desired amount of neutralization of the acid functionality may be employed, in a preferred embodiment from 1 to 75 percent by weight of the functional moieties of the block polymer are the neutral salts thereof. In other respects, the neutralization process to produce ionomeric functionality in the resulting diene/methacrylic acid block polymers is as previously known in the art.

In a desired embodiment of the present invention, the diene functionality of the diene containing block polymers of the invention is hydrogenated to provide modified polymeric properties. Such hydrogenation is accomplished by the use of conventional processing conditions such as contacting with hydrogen in the presence of a noble metal catalyst. The above described hydrogenation process may be accomplished at any point during the synthesis. That is, the hydrogenation may be performed after addition of the hydrolyzable methacrylate ester functionality but before hydrolysis, after hydrolysis but before neutralization, or after neutralization.

The modified block polymers of the present invention may suitably be employed as elastomers, and as adhesives. In addition, by the selective addition of methacrylate ester functionality to diene block polymers according to the present invention, properties such as refractive index may be modified in order to provide elastomers for particularly utilization in the preparation of transparent impact modified thermoplastic polymers.

As elastomers the compositions are beneficially employed as impact modifiers for various polymers. Suitably an impact modified polymeric composition may be prepared containing at least 5 percent by weight of the present block copolymers and additionally containing one or more polymer components selected from the group consisting of polymethylmethacrylate, polystyrene, polyvinylchloride, polycarbonate, epoxy resins, polyaryl ethers, polysulfones; copolymers of monomers selected from the group consisting of vinylaromatic monomers, acrylonitrile, methylmethacrylate, dicarboxylic acid anhydrides, and N-phenyl maleimide; and rubber modified derivatives of the foregoing polymers. Additional conventional additives such as reinforcing aids (glass, carbon, ceramic or other fibrous materials), plasticizers, stabilizers (UV and heat stabilizers), additional rubbery polymers, and colorants may be added.

The block copolymers are also beneficially employed as elastomers for molding hoses, containers, gaskets and fittings for transport of various liquids. The ionomeric block copolymers in particular are especially resistant to the deleterious effects of oils, fats, hydrocarbons, and chlorinated and/or fluorinated hydrocarbons. In such applications the block copolymers are usefully combined in an amount of at least 5 percent by weight with additional components selected from rubbery polymers, plasticizers, colorants, crosslinking agents, flow promoters, UV stabilizers, heat stabilizers, extenders (such as oils), fillers (such as mica, talc, carbon black, etc.) and reinforcing aids.

Finally the block copolymers may be employed in adhesive formulations. In such applications the block copolymers are usefully combined in an amount of at least 5 percent by weight with additional components selected from tackifiers, solvents, and crosslinking agents.

Having described the invention, the following examples are provided as further illustrative and are not to be construed as limiting.

## Example 1

Block copolymers were prepared by reaction of suitable monomers with a difunctional initiator. Isoprene, 40 g, was added to a stirred, heated, glass bowl polymerization reactor that had been previously purged with nitrogen and charged with cyclohexane (500 ml). The initiator, 1,3-phenylene-bis(3-methyl-1-phenylpentylidene)bis(lithium), prepared according to the teachings of U.S.Patent 4,196,154, (0.5 mmole) as a 1.35 solution in cyclohexane was added and the reactor heated to 60°C and maintained at this temperature for 2 hours. Following complete isoprene polymerization, an aliquot of the living polymer solution (containing approximately 10 g of polymer) was removed for further modification.

In the next step, tertiary-butyl methacrylate (4.0 g) was added to the living polymer solution in a reactor at about 25°C. The reaction was continued one additional hour. The polymerization was terminated by adding methanol to the reactor and the product was recovered by precipitation from a methanol/water

solution (90/10 by volume). Analysis by nuclear magnetic resonance spectroscopy indicated a final polymerized tertiary-butyl methacrylate content of 29 mole percent. The tacticity as measured by $C^{13}$ NMR was greater than 99 percent. A clear film suitable for use as a coating or packaging sheet was cast from cyclohexane solution.

Example 2

The reaction conditions of Example 1 were substantially repeated excepting that the solvent employed during tertiary-butyl methacrylate addition was a mixture of cyclohexane and tetrahydrofuran (50/50 by volume). The resulting polymer had a polymerized tertiary-butyl methacrylate content of 30 weight percent. The polymer had a 1,4-diene polymer content of 92 mole percent, and 52 percent syndiotacticity about the methacrylate quaternary carbon.

Example 3

The reaction conditions of Example 1 were substantially repeated excepting that a minor amount of styrene monomer (5 weight percent) was added to the isoprene aliquot in a reactor and polymerized to form a terminal block prior to addition of the tertiary-butyl methacrylate. The resulting triblock polymer comprised tertiary-butyl methacrylate, styrene and isoprene. Analysis by nuclear magnetic resonance spectroscopy indicated the final polymerized monomer content was approximately 62 percent isoprene, 5 percent styrene, and 33 percent tertiary-butyl methacrylate.

Example 4

The reaction conditions of Example 3 were substantially repeated excepting that the solvent employed was a mixture of cyclohexane and tetrahydrofuran (50/50 by volume). The resulting polymer had a polymerized tertiary-butyl methacrylate content of 30 mole percent. The polymer had 92 mole percent, 1,4-diene polymer content and 52 percent syndiotacticity about the diene double bond. The molecular weight distribution was 1.25.

Example 5

The reaction conditions of Example 1 were substantially repeated excepting that a monofunctional initiator, sec-butyl lithium, 0.5 mmoles, was employed to prepare a diblock polymer of tertiary-butyl methacrylate and isoprene. The resulting polymer had a tertiary-butyl methacrylate content of about 33 weight percent. The number average molecular weight as determined by gel permeation chromatography was 126,000 g/mole. The molecular weight distribution was 1.09.

Example 6

The block copolymer of Example 1 (2.0 g) in toluene solution was heated to 80 °C in the presence of para-toluene sulfonic acid (5 mole percent) to evolve isobutylene and a triblock copolymer having polymerized isoprene center block and methacrylic acid terminal blocks. Substantially complete conversion of tertiary-butyl groups was obtained in about 90 minutes. The product was cast from toluene solution to result in a clear film suitable for use as a coating or an adhesive film.

Example 7

The methacrylic acid functionalized triblock polymer of Example 6 was converted to an ionomer functionalized polymer by titrating the same in tetrahydrofuran solution utilizing potassium hydroxide (0.1 Molar in methanol) and phenolphthalein as an indicator. Greater than 95 percent conversion of acid functionality was obtained. The resulting polymer was compression molded to prepare a thin disk for further property testing. The disk was elastic and insoluble in hydrocarbon solvents.

Examples 8-13

Block copolymers (1A, a diblock utilizing 1,1-diphenyl-3-methylhexyl lithium initiator and 1B a triblock using 1,4-dilithio-1,1,4,4-tetraphenyl butane initiator) comprising t-butyl methacrylate and 2-ethylhexylmethacrylate in the amounts indicated in Table I were prepared and characterized. A portion of each was then subjected to hydrolysis to yield the corresponding block copolymers (2A, 2B) containing 2-ethylhexylmethacrylate and methacrylic acid moieties. Potassium containing block ionomers (3A, 3B) were subsequently prepared by neutralization of a portion of the block copolymers (2A and 2B) with potassium hydroxide.

t-Butyl methacrylate was obtained from Rohm-Tech, and 2-ethylhexylmethacrylate was obtained from Polysciences Inc. Both monomers were stirred over finely ground calcium hydride for 2-3 days, followed by distillation under reduced pressure. The monomers were then transferred to a clean, dry bottle via a double ended needle and stored at -20° C under a nitrogen atmosphere. Immediately before use, the monomers were distilled under reduced pressure from a trialkyl aluminum or dialkyl aluminum hydride complex. In some cases, the final purification of the monomer was accomplished by complexing the calcium hydride purified monomer with the aluminum compound in one vessel, and then passing this solution through a column of activated basic alumina (Fisher). The clear effluent was then degassed under reduced pressure or under a nitrogen purge. The trialkyl aluminums and dialkyl aluminum hydrides were obtained from the Ethyl Corporation as 25 weight percent solutions in hexane. t-butyl lithium was obtained from the Lithco Division of FMC as a solution in cyclohexane (1.4M). The polymerization solvent was tetrahydrofuran (THF) (Fisher certified grade) which was distilled under dry nitrogen immediately before use from the purple sodium/benzophenone ketyl.

The difunctional initiator that was employed was 1,4-dilithio-1,1,4,4-tetraphenylbutane which was prepared in a 250-ml one-necked round-bottomed flask equipped with a glass-encased magnetic stirring bar, and a rubber septum wired on with copper wire for a tight seal. The flask had been flamed with a nitrogen purge and was kept under an atmosphere of 40 Pa dry nitrogen. A four-fold molar excess of lithium wire (alpha Inorganics, Ventron) was placed quickly into the flask and a new septum wired on. The reaction flask was again flamed under a dry nitrogen purge, and kept under 40 Pa nitrogen until cool. The solvent (THF) was then transferred to the flask via a double ended needle. The solvent was degassed with a nitrogen purge and a calculated volume of 1,1-diphenyl ethylene was syringed into the reaction vessel. The reaction mixture was stirred under a 40 Pa nitrogen atmosphere at room temperature for about 5 hours. The bright red initiator solution was removed by syringe.

The polymerization procedure for the preparation of block polymer IA was by the sequential addition technique utilizing the monofunctional initiator, 1,1-diphenyl-3-methylpentyl lithium (DMPL), prepared by reacting 1,2-diphenyl ethylene with t-butyl lithium in hexane solvent. t-Butyl methacrylate was reacted first.

The procedure using the difunctional initiator was very similar. The solution of initiator was added dropwise until the red color of the initiator was stabilized, indicating that final impurities in the polymerization reactors were titrated, then the calculated volume of initiator was charged. The monomers were then added dropwise to the initiator solution, with the center block being polymerized first.

All polymerizations were conducted in tetrahydrofuran solvent at -78° C. Polymerization of each block was conducted for 20 minutes. The polymerizations were then terminated with degassed methanol and the polymers precipitated in methanol/water (80/20) and dried in vacuo overnight at ca. 60° C. Amounts of the various monomers employed and the resulting polymer compositions are listed in Table I.

TABLE I

| Ex. | Type | EHMA[1] (g) | TBMA[2] (g) | Wt. ratio[3] | Mn $x(10^{-3})$[4] |
|---|---|---|---|---|---|
| 1 | 1A | 14.1 | 0.45 | 3/97 | -- |
| 2 | 1B | 14.4 | 0.6 | 2/96/2 | 136 |
| 3 | 1B | 13.8 | 1.2 | 4/92/4 | 149 |
| 4 | 1B | 13.2 | 1.8 | 6/88/6 | 187 |
| 5 | 1B | 12.6 | 2.4 | 8/84/8 | 128 |
| 6 | 1B | 12.0 | 3.0 | 10/80/10 | 168 |

[1] 2-ethylhexyl methacrylate
[2] t-butyl methacrylate
[3] weight ratio TBMA/EHMA or TBMA/EHMA/TBMA
[4] number average molecular weight

Example 14

A triblock polymer was made by sequential polymerization using DMPL initiator to polymerize 0.45g tert-butyl methacrylate first then 14.10g 2-ethylhexylmethacrylate. Instead of terminating the diblock polymer, 0.45g more tert-butyl methacrylate was added to make a 3/94/3 TBMA/EHMA/TBMA composition. The number average molecular weight as determined by GPC using polystyrene calibration was 113,700.

Examples 15-20

The poly(t-butyl methacrylate) containing block polymers of Examples 8-13 were hydrolyzed with acid catalysis at mild temperatures (80° C). Typically, 5-10 weight percent (based on t-butyl ester content) of p-toluene sulfonic acid was used. The block polymers were dissolved in toluene (Fisher. certified grade) at ca. 5 percent solids with the acid and heated to 80° for 8 hours. A slow nitrogen purge through the headspace helped facilitate the removal of the volatile isobutylene product of the hydrolysis. After hydrolysis, the polymers were precipitated in cold methanol (-78° C) and dried in vacuo overnight at 100° C. The resulting block copolymers were 2A, 2-ethylhexylmethacrylate/methacrylic acid block copolymer, Example 15, and 2B, methacrylic acid/2-ethylhexylmethacrylate/methacrylic acid block copolymer, Examples 16-20.

Examples 21-26

The block-ionomers were formed by neutralization of the acid-containing polymers of Examples 15-20 with methanolic potassium hydroxide (KOH, Fisher certified, 0.1 N). The acid polymers were dissolved in THF at ca. 5 percent solids and titrated at ambient temperature and atmosphere to a phenolphthalein endpoint. To avoid the possibility of indicator contamination in the polymers that were to be tested, a known amount of the acid containing polymer was titrated to a phenolphthalein endpoint, and the volume of base required to titrate a larger amount of the polymer was based on that titration. The ionomers were then precipitated in methanol (-78° C), or films were cast directly from the neutralization solvent after filtration and dried in vacuo overnight at 100° C. The resulting block copolymers were 3A, 2-ethylhexyl methacrylate/ $-(CH-C(CH_3)(COO^-K^+))-$ ionomer block copolymer, Example 21, and 3B, $-(CH-C(CH_3)(COO^-K^+))-$/ 2-ethylhexylmethacylate/ $-(CH-C(CH_3)(COO^-K^+))-$ ionomer block copolymer, Examples 22-26.

Molecular weight and molecular weight distributions of the precursors and acid-containing polymers were determined by gel permeation chromatography (GPC). A Waters 590 GPC equipped with columns of 500 Angstroms, $10^3$ Angstroms, $10^4$ Angstroms, $10^5$ Angstroms was utilized. Both poly(methyl

methacrylate) and polystyrene standards (Polymer Laboratories) were used in these characterizations.

Fourier transform infrared spectroscopy (FTIR) was performed on a Nicolet MX-1 spectrometer. Nuclear magnetic resonance spectroscopy (NMR) was performed on a Bruker WP-270 high resolution spectrometer. The results confirmed the assigned identities of the polymers.

Example 27

When the reaction conditions of Example 1 are substantially repeated utilizing ethyl methacrylate in place of tertiary butyl methacrylate, the resulting ethyl methacrylate containing block copolymer is expected to be easily hydrolyzable to the corresponding methacrylic acid containing block copolymer.

Example 28

When the reaction conditions of Example 1 are repeated utilizing 2-methyl-2-butyl methacrylate in place of tertiary butyl methacrylate, the resulting 2-methyl-2-butyl methacrylate containing block copolymer may be hydrolyzed to the corresponding methacrylic acid containing block copolymer.

## Claims

1. A composition including at least 90 percent by weight of a block polymer comprising in polymerized form at least one block of a moiety selected from the hydrolyzable $C_{2-5}$ alkyl esters of methacrylic acid: methacrylic acid; and ionomers of methacrylic acid and at least one other block of an anionically copolymerizable monomer other than methylmethacrylate.

2. A composition according to Claim 1, wherein the other block comprises in polymerized form a conjugated diene, a hydrogenated conjugated diene or a $C_{6-20}$ nonhydrolyzable methacrylate ester.

3. A composition including at least 90 percent by weight of a block polymer corresponding to the Formula AB ( $BA)_n$ or BA ( $AB)_n$, wherein:

A is a homopolymer comprising, in polymerized form, a hydrolyzable ester of methacrylic acid having from 2 to 5 carbons in the ester group, methacrylic acid, or a salt of methacrylic acid, or A is a block or random copolymer comprising, in polymerized form, more than one hydrolyzable ester of methacrylic acid, methacrylic acid or an ionomer thereof; or A is a block or random copolymer of one or more hydrolyzable esters of methacrylic acid, methacrylic acid or salts thereof with one or more copolymerizable comonomers.

B is a homopolymer comprising, in polymerized form, a non-hydrolyzable methacrylate ester moiety having from 6 to 20 carbons in the ester group, or a diene or hydrogenated diene moiety, or B is a block or random copolymer comprising in polymerized form more than one non-hydrolyzable methacrylate ester moiety having from 6 to 20 carbons, or more than one diene or hydrogenated diene; or B is a block or random copolymer comprising in polymerized form one or more than one non-hydrolyzable methacrylate esters having from 6 to 20 carbons in the ester group, conjugated dienes or hydrogenated dienes with one or more copolymerizable comonomers, and

n is a number from 0 to 6.

4. A composition according to Claim 2 or Claim 3, wherein the diene is butadiene or isoprene and the non-hydrolyzable methacrylate ester is an aryl or alkyl methacrylate.

5. A composition according to Claim 4, wherein the non-hydrolyzable methacrylate is 2-ethylhexylmethacrylate.

6. A composition according to any one of the preceding claims, wherein the hydrolyzable alkyl ester of methacrylic acid is a tertiary alkyl methacrylate.

7. A composition according to Claim 6, wherein the tertiary alkyl methacrylate is t-butyl methacrylate.

8. A composition according to any one of the preceding claims, additionally comprising in polymerized form a block of a monovinylidene aromatic monomer.

9. A composition according to Claim 8, wherein the monovinylidene aromatic monomer is styrene.

10. An impact modified polymer comprising at least 5% by weight of a block polymer according to any one of the preceding claims and additionally containing one or more polymer components selected from polymethylmethacrylate, polystyrene, polyvinylchloride, polycarbonate, epoxy resins, polyaryl ethers, polysulfones, copolymers of monomers selected from vinylaromatic monomers, acrylonitrile, methylmethacrylate, dicarboxylic acid anhydrides, and N-phenyl maleimide; and rubber modified derivatives of the foregoing polymers.

11. An elastomeric polymer composition comprising at least 5% by weight of a block polymer according to any one of Claims 1 to 9 and additionally containing one or more components selected from rubbery polymers, tackifiers, plasticizers, colorants, crosslinking agents, flow promoters, UV stabilizers, heat stabilizers, extenders, fillers and reinforcing aids.

12. An adhesive composition comprising at least 5% by weight of a block polymer according to any one of Claims 1 to 9 and additionally containing one or more components selected from tackifiers, solvents and cross-linking agents.

13. A process for preparing a block polymer according to any one of the preceding claims comprising:

a) contacting a hydrolyzable $C_{2-5}$ alkyl ester of methacrylic acid and at least one other anionically copolymerizable monomer in any order with from 0.001 to 1.0 percent by weight of an organometallic anionic polymerization initiator under anionic polymerization conditions;

b) optionally, hydrolyzing the $C_{2-5}$ alkyl ester functionality of the block polymer product of step (a); and

c) optionally, neutralizing the methacrylic acid functionality of the block polymer product of step (b) by contacting with a basic reagent.

14. A process according to Claim 13, wherein the anionic polymerization of step (a) is carried out in the presence of a polar, aprotic organic compound in a quantity sufficient to modify the polymerization rate.

15. A process according to Claim 14, wherein the solvent is a cyclic ether.